(19) **Europäisches Patentamt**
**European Patent Office**
**Office européen des brevets**

(11) **EP 4 105 529 B1**

(12) **EUROPÄISCHE PATENTSCHRIFT**

(45) Veröffentlichungstag und Bekanntmachung des Hinweises auf die Patenterteilung:
**30.07.2025   Patentblatt 2025/31**

(21) Anmeldenummer: **22177916.8**

(22) Anmeldetag: **08.06.2022**

(51) Internationale Patentklassifikation (IPC):
*B60R 21/38* (2011.01)      *F16K 31/00* (2006.01)
*F16K 31/02* (2006.01)      *F16K 37/00* (2006.01)
*B60R 21/13* (2006.01)      *F16K 31/08* (2006.01)

(52) Gemeinsame Patentklassifikation (CPC):
**F16K 31/082; F16K 31/003; F16K 31/025;
F16K 37/0008; F16K 37/0041; B60R 21/38;
B60R 2021/135**

(54) **AUSLÖSEEINRICHTUNG UND ANORDNUNG MIT EINER AUSLÖSEEINRICHTUNG**

TRIGGER DEVICE AND AN ASSEMBLY COMPRISING A TRIGGER DEVICE

DISPOSITIF DE DÉCLENCHEMENT ET AGENCEMENT DOTÉ D'UN DISPOSITIF DE DÉCLENCHEMENT

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorität: **14.06.2021   DE 102021206036**

(43) Veröffentlichungstag der Anmeldung:
**21.12.2022   Patentblatt 2022/51**

(73) Patentinhaber: MAGENTA GmbH Mechatronische
und Kinematische
Systeme
66701 Beckingen (DE)

(72) Erfinder: **Bierbrauer, Christian Ruwen
66773 Schwalbach (DE)**

(74) Vertreter: **Patentanwälte
Ruff, Wilhelm, Beier, Dauster & Partner mbB
Kronenstraße 30
70174 Stuttgart (DE)**

(56) Entgegenhaltungen:
EP-A2- 1 583 119          WO-A1-2017/180316
WO-A1-2018/130275     WO-A1-2021/023758
DE-A1- 10 208 920       DE-A1- 102017 123 429
US-A- 3 563 098           US-A- 5 518 430
US-A1- 2014 270 928    US-B2- 8 398 051

EP 4 105 529 B1

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

Processed by Luminess, 75001 PARIS (FR)

**Beschreibung**

Die Erfindung betrifft eine Auslöseeinrichtung, insbesondere für Ventile von Brandschutzeinrichtungen, Wasserstoffanwendungen und dergleichen sowie für mechanische Einrichtungen wie Überrollbügel und Fußgängerschutzeinrichtungen an Kraftfahrzeugen, mit einem Gehäuse, mit einer Betätigungsstange, die in und entgegen einer Auslöserichtung axial verschiebbar an oder in dem Gehäuse gelagert ist, mit einer Auslösefeder zum Vorspannen der Betätigungsstange in die Auslöserichtung, mit einer Arretiereinrichtung zum Arretieren der Betätigungsstange in einer vorgespannten Position gegen die Wirkung der Auslösefeder, wobei die Arretiereinrichtung wenigstens ein Arretierelement aufweist und wobei mittels einer Bewegung des Arretierelements die Betätigungsstange freigegeben werden kann.

Auslöseeinheiten, die genutzt werden, um Ventile zu öffnen, werden meist mechanisch, pneumatisch, hydraulisch, elektromagnetisch, oder als Kombination ausgelegt.

Auslöseeinrichtungen finden Anwendung im Bereich von Überrollbügeln für Pkw, Fußgängerschutz für Pkw, Sicherheitsventilen, Automation, Schnellschlussventilen für Wasserstoffanwendungen, Auslöseeinrichtung für Brandschutzeinrichtungen und dergleichen.

Speziell im Bereich des Brandschutzes, werden vorwiegend elektromagnetische Auslöseeinheiten genutzt, um das Ventil eines mit Brandschutzmittel gefüllten Speichers zu öffnen. Gründe für den vorwiegenden Einsatz von elektromagnetischen Auslöseeinheiten liegen unter anderem darin, dass am Einsatzort ausschließlich eine elektrische Spannungsversorgung als Energiequelle benötigt wird und dass geringe Schaltzeiten erzielt werden können.

Bekannte elektromagnetische Auslöseeinheiten werden als Haftmagneten aufgebaut. Dabei wird die benötigte Auslösekraft zum Öffnen des Ventils als Federenergie gespeichert und über die Anziehungskraft des Permanentmagneten, die sogenannte Haltekraft, gehalten. Durch das Anlegen eines elektrischen Stromes wird das permanent-magnetische Feld neutralisiert und die gespeicherte Federenergie wird freigesetzt. Das Ventil öffnet.

Um das System zurückzustellen, wird eine axial verschiebbar gelagerte Betätigungsstange von Hand in Richtung des Polkerns des Elektromagneten gedrückt. Dabei bewegt sich die Ankerscheibe des Elektromagneten ebenfalls in Richtung Polkern, auch infolge der Anziehungskraft des permanent-magnetischen Feldes. Liegt der Anker an der Polfläche an, werden sowohl Anker als auch Betätigungsstange im unbestromten Zustand dauerhaft am Polkern gehalten. Dies deshalb, da die Auslösekraft kleiner ist als die Haltekraft des Permanentmagneten.

Die Auslösekraft, die benötigt wird, um das Ventil zu öffnen, wird dadurch erzeugt, dass die Betätigungsstange während ihrer Bewegung zum Polkern federnde Elemente komprimiert. Folglich kann ein dauerhaftes Halten von Betätigungsstange und Anker am Polkern nur erreicht werden, wenn die eingestellte Federkraft bzw. Auslösekraft unterhalb der Haltekraft des Magnetkreises liegt. Die Resthaltekraft, die sich aus der Differenz zwischen Haltekraft und Auslösekraft bildet, kennzeichnet die Sicherheit vor ungewolltem Auslösen und stellt die Kraftgröße dar, die für eine Notbetätigung -Prinzip der Redundanz, z.B. über eine Nothandbetätigung- benötigt wird.

$$Resthaltekraft = Haltekraft - Auslösekraft$$

$$Auslösekraft \; \hat{=} \; Federkraft$$

$$Haltekraft \; \hat{=} \; Magnetkraft \; Permanentmagnet$$

Im Hinblick auf die besonderen Anforderungen im Bereich des Brandschutzes und der charakteristischen Bauweise als Haftmagnet, weisen solche elektromagnetischen Auslöseeinheiten besondere Merkmale bzw. Schwächen auf.

1) Die zur Verfügung stehende Haltekraft des Permanentmagneten kann nicht vollständig als Auslösekraft genutzt werden.

2) Proportionaler Zusammenhang zwischen Resthaltekraft und Auslösekraft. Mit zunehmender Resthaltekraft sinkt die Auslösekraft, bei gleichbleibender Haltekraft. Die drei Kräfte können nicht unabhängig voneinander beeinflusst werden.

3) Auf Grund des Zusammenhangs, dass sich die Resthaltekraft aus der Differenz zwischen Haltekraft und Auslösekraft bildet, können die drei Kräfte nicht unabhängig voneinander beeinflusst werden.

4) Die Sicherheit gegen ungewolltes Auslösen bei Vibrationen bzw. äußeren Beschleunigungen wird über die *Resthaltekraft* definiert. Diese *Resthaltekraft* wird aus der Differenz zwischen *Haltekraft* und *Auslösekraft* gebildet. Folglich ist die Sicherheit gegen Vibrationen bzw. äußere Beschleunigung von *Haltekraft* und *Auslösekraft* abhängig.

5) Um Auslösekraft und Resthaltekraft im gleichen Verhältnis auf ein höheres Kraftniveau zu bringen, muss die Haltekraft des Permanentmagneten erhöht werden. Dies wird durch eine Volumenvergrößerung des Permanentmagneten erreicht. Auf Grund dieser Volumenvergrößerung ist eine Miniaturisierung des Gesamtsystems, bei steigendem Kraftniveau, nicht möglich. Mit der Vergrößerung des Permanentmagneten geht auch eine Vergrößerung der Spule einher, um die gestiegene Magnetkraft des Permanentmagneten zum Auslösen ausreichend zu schwächen.

6) In Folge der in Punkt 5) beschriebenen Volumenvergrößerung des Permanentmagneten steigen die Materialkosten des Systems deutlich.

7) Durch polungsrichtige Bestromung der Spule wird das Magnetfeld des Permanentmagneten geschwächt - die *Haltekraft* bzw. *Resthaltekraft* verringert sich. Der Aktuator löst aus. Somit ist die benötigte elektrische Energie abhängig aus dem Zusammenspiel aus *Haltekraft, Auslösekraft* und *Resthaltekraft.*

8) Die Rückstellung des Systems erfolgt manuell. D.h. es wird eine Person ("Fachkraft") benötigt, um das System zurückzustellen, was mit erheblichen Kosten verbunden ist. Ebenso ist der Auslösemechanismus nicht unmittelbar nach dem Auslösen wieder einsatzbereit.

Im Zuge steigender Ansprüche an Qualität und sicherheitstechnische Anforderungen wächst auch die Nachfrage nach einer Überwachungsfunktion, die die korrekte Montage der Auslöseeinrichtung an dem entsprechenden Gegenstück, z.B. einem Ventil, detektiert.

Auf Grund der Funktionsweise der Auslöseeinrichtung mittels Kraftübertragung über die Betätigungsstange (20) mit einem definierten Hub-, wird diese so montiert, dass die Betätigungsstange axial zur Ventilöffnung (330) verläuft und einen definierten Abstand zum Ventilstößel aufweist. Die korrekte und bündige Montage der beiden Anlageflächen der Auslöseeinrichtung und des Gegenstücks, z.B. eines Ventils, wird mittels Sensoren detektiert.

Ein weiter Grund für den Einsatz einer Überwachungsfunktion über Sensoren sind stetig wiederkehrende Funktionsprüfungen der Aktoren, mit denen die Auslöseeinrichtung betätigt wird, die im demontierten Zustand durch Fachpersonal durchgeführt werden. Dass die Aktoren und gegebenenfalls die Auslöseeinrichtungen nach diesen Funktionsprüfungen durch das Fachpersonal wieder korrekt montiert worden sind, kann über solch eine Überwachungsfunktion detektiert werden.

Einen Sensor kann ein mechanischer Schalter darstellen, der eine elektrische Verbindung herstellen oder trennen kann und somit ein Signal zur weiteren Verarbeitung bereitstellt. Solche mechanischen Schalter stellen ein Standardprodukt in der Industrie dar und sind von ihrem Funktionsumfang, Baugröße und Montagepositionierung für eine allgemeine Anwendung ausgelegt. Solche standardisierten mechanischen Schalter können spezifische Anforderungen, wie sie in der Sicherheitstechnik (z.B. im Brandschutzsektor) gefordert sind, nicht oder nur teilweise erfüllen.

- Keine zentrische und axiale Montage zur Welle (Betätigungsstange) möglich,

- Keine integrierte Funktion als Gleitlager, somit zusätzliches Lager notwendig. Steigende Kosten

- Mögliche Verhinderung bzw. Behinderung einer "Notfall-Entgasung" aufgrund der Geometrie und Positionierung des Schalters.

- Hub nur begrenzt einstellbar

- Funktionsweise und Bauweise nicht kundenspezifisch anpassbar

Aus der US-Offenlegungsschrift US 2014/0270928 A1 ist eine Auslöseeinrichtung mit einem Gehäuse, mit einer Betätigungsstange, die in und entgegen einer Auslöserichtung axial verschiebbar in dem Gehäuse gelagert ist, mit einer Auslösefeder zum Vorspannen der Betätigungsstange in die Auslöserichtung mit einer Arretiereinrichtung zum Arretieren der Betätigungsstange in einer vorgespannten Position gegen die Wirkung der Auslösefeder, wobei die Arretiereinrichtung wenigstens ein Arretierelement aufweist, wobei mittels einer Bewegung des Arretierelements die Betätigungsstange freigegeben werden kann, bekannt, wobei die Betätigungsstange einen Absatz aufweist und wobei das Arretierelement in radialer Richtung zur Betätigungsstange bewegbar angeordnet ist, wobei das Arretierelement in einer Arretierstellung an dem Absatz der Betätigungsstange angreift und in einer Freigabestellung außerhalb des Absatzes der Betätigungsstange angeordnet ist, und wobei ein Schieber vorgesehen ist, der in axialer Richtung im Gehäuse verschiebbar gelagert ist und der in einer ersten Stellung das wenigstens eine Arretierelement an dem Absatz der Betätigungsstange blockiert und in einer zweiten Stellung eine Bewegung des Arretierelements aus der Umfangsnut oder aus der Ausnehmung heraus ermöglicht. Die Arretierelemente sind als Kugeln ausgebildet.

Aus der US-Patentschrift US 3,563,098 ist eine weitere Auslöseeinrichtung mit einer Betätigungsstange bekannt, wobei die Betätigungsstange mittels Arretierelementen blockiert oder freigegeben werden kann.

Ein weiteres Arretierelement ist aus der europäischen Offenlegungsschrift EP 1 583 119 A2 bekannt. Auch hier wird eine Betätigungsstange mittels kugelförmiger Arretier-elemente blockiert oder freigegeben.

Eine weitere Auslöseeinrichtung mit einer Betätigungsstange ist aus der internationalen Offenlegungsschrift WO 2018/130275 A1 bekannt und auch dort blockieren kugelförmige Arretierelemente eine Betätigungsstange oder geben diese frei.

Aus der deutschen Offenlegungsschrift DE 102017 123 429 A1 ist eine Ventilanordnung bekannt.

Aus der US-Patentschrift US 8,398,051 B2 ist ebenfalls eine Betätigungseinrichtung für ein Ventil bekannt.

Aus der deutschen Offenlegungsschrift DE 102 08 920 A1 ist ein Differenzdruckwächter zum Betätigen eines Schaltventils bekannt.

Aus der internationalen Offenlegungsschrift WO 2021/023758 A1 ist ein Ventil mit einem Formgedächtnisaktor bekannt.

Aus der US-Patentschrift US 5,518,430 ist ein Auslösemechanismus für chemische, pyrotechnische, elektrische, mechanische und pneumatische Einrichtungen bekannt.

Aus der internationalen Offenlegungsschrift WO 2017/180316 A1 ist eine Drucktesteinrichtung bekannt, bei der ein Schaft blockiert oder freigegeben werden kann.

Mit der Erfindung soll eine Auslöseeinrichtung verbessert werden.

Erfindungsgemäß ist hierzu eine Auslöseeinrichtung mit den Merkmalen von Anspruch 1 vorgesehen. Vorteilhafte Weiterbildungen der Erfindung sind in den Unteransprüchen genannt.

Es ist eine Auslöseeinrichtung, insbesondere für Ventile von Brandschutzeinrichtungen, Wasserstoffanwendungen und dergleichen sowie für mechanische Einrichtungen wie Überrollbügel und Fußgängerschutzeinrichtungen an Kraftfahrzeugen, vorgesehen, die ein Gehäuse, eine Betätigungsstange, die in und entgegen einer Auslöserichtung axial verschiebbar an oder in dem Gehäuse gelagert ist, eine Auslösefeder zum Vorspannen der Betätigungsstange in die Auslöserichtung und eine Arretiereinrichtung zum Arretieren der Betätigungsstange in einer vorgespannten Position gegen die Wirkung der Auslösefeder aufweist, wobei die Arretiereinrichtung wenigstens ein Arretierelement aufweist und wobei mittels einer Bewegung des Arretierelements die Betätigungsstange freigegeben werden kann. Die Betätigungsstange weist eine Umfangsnut oder eine Ausnehmung auf und das Arretierelement ist in radialer Richtung zur Betätigungsstange bewegbar angeordnet. Das Arretierelement greift in einer Arretierstellung in die Umfangsnut oder die Ausnehmung der Betätigungsstange ein. In einer Freigabestellung ist das Arretierelement außerhalb der Umfangsnut oder der Ausnehmung der Betätigungsstange angeordnet. Weiter ist ein Schieber vorgesehen, der in axialer Richtung im Gehäuse verschiebbar gelagert ist und der in einer ersten Stellung das wenigstens eine Arretierelement in der Umfangsnut oder in der Ausnehmung der Betätigungsstange blockiert und der in einer zweiten Stellung eine Bewegung des Arretierelements aus der Umfangsnut oder aus der Ausnehmung heraus ermöglicht.

Mittels eines in radialer Richtung bewegbaren Arretierelements und eines Schiebers, der eine Bewegung des Arretierelements blockiert oder freigibt, kann zum einen eine Auslöseeinrichtung realisiert werden, bei der eine Auslösekraft unabhängig von einer Haltekraft ist. Denn der Schieber blockiert in seiner ersten Stellung eine Bewegung des Arretierelements. Die Auslösekraft, die beispielsweise von einer auf die Betätigungsstange wirkenden Feder aufgebracht wird, wird von den Arretierelementen aufgenommen, die sich wiederum am Gehäuse abstützen. Der Schieber blockiert lediglich die Bewegung des Arretierelements aus der Umfangsnut oder der Ausnehmung der Betätigungsstange heraus. Die Antriebskraft oder Kraft zum Lösen der Blockierung der Arretierelemente wird von einem Aktor oder Aktuator erzeugt und wird nur dazu benötigt, den Schieber in die zweite Stellung zu bewegen, in der der Schieber eine Bewegung des Arretierelements aus der Umfangsnut oder aus der Ausnehmung heraus ermöglicht und in der zweiten Stellung des Schiebers kann infolgedessen dann die Auslösekraft die Betätigungsstange bewegen, so dass diese dann ein zugeordnetes Ventil öffnen kann oder eine sonstige Funktion ausführen kann.

Zum anderen ist durch das Vorsehen einer Umfangsnut oder einer Ausnehmung in der Betätigungsstange und wenigstens eines Arretierelements sowie eines Schiebers eine Miniaturisierung der Auslöseeinrichtung möglich. Diese Miniaturisierung ist trotz einer erheblichen Steigerung der Auslösekraft gegenüber konventionellen Auslöseeinrichtungen möglich. Dies wird erfindungsgemäß dadurch erreicht, dass wenigstens ein in radialer Richtung bewegliches Arretierelement vorgesehen ist, das in einer Stellung, in der die Betätigungsstange blockiert ist, einerseits an der Betätigungsstange und andererseits an einer geeigneten Abstützfläche am Gehäuse anliegt. Der Schieber gibt dann eine Bewegung des wenigstens einen Arretierelements in radialer Richtung nach außen frei. Dadurch bewegt sich das Arretierelement aus seiner Stellung zwischen der Betätigungsstange und der Abstützfläche am Gehäuse heraus und die Betätigungsstange kann sich in Auslöserichtung bewegen. Eine Rückstellung der Betätigungsstange in die Ausgangsstellung, in der die Bewegung der Betätigungsstange gesperrt ist, kann entweder manuell durch einfaches Zurückdrücken oder durch geeignete Aktoren erfolgen.

In Weiterbildung der Erfindung weist die Umfangsnut oder die Ausnehmung eine in der Auslöserichtung gesehen hintere Seitenwand auf, wobei die hintere Seitenwand sich schräg nach radial außen öffnet, um das Arretierelement in der Arretierstellung sowohl in Auslöserichtung als auch in einer Richtung radial nach außen zu drücken.

Eine solche Ausgestaltung der hinteren Seitenwand begünstigt eine sehr schnelle Verdrängung des wenigstens einen Arretierelements nach radial außen, sobald der Schieber das Arretierelement freigegeben hat. Dadurch können sehr geringe Schaltzeiten bzw. Reaktionszeiten der erfindungsgemäßen Auslöseeinrichtung erzielt werden.

In Weiterbildung der Erfindung umgibt der Schieber die Betätigungsstange und ist in axialer Richtung der Betätigungsstange verschiebbar gelagert.

Auf diese Weise lässt sich eine sehr kompakte Auslöseeinrichtung realisieren, die auch für sehr hohe Auslösekräfte geeignet ist.

In Weiterbildung der Erfindung weist das Gehäuse eine Arretierelementführung, z.B. eine Kugelführung auf, wobei die Betätigungsstange in oder an der Arretierelementführung axial verschiebbar gelagert ist und der Schieber in oder an der Arretierelementführung axial verschiebbar gelagert ist.

Eine solche Arretierelementführung stellt beispielsweise einen Kanal für eine Bewegung der Arretierelemente bereit und gleichzeitig stellt die Arretierelementführung eine Abstützfläche des Gehäuses bereit, an der sich die Arretierelemente in der gesperrten Stellung der Betätigungsstange abstützen können. Das wenigstens eine Arretierelement liegt dann zum einen an einer Seitenwand der Umfangsnut oder Ausnehmung in der Betätigungsstange an und andererseits auch an einer Abstützfläche an der Arretierelementführung.

In Weiterbildung der Erfindung weist die Arretierelementführung wenigstens eine Querbohrung auf, in der sich das Arretierelement zwischen der Arretierstellung und der Freigabestellung bewegen kann.

Eine solche Querbohrung bildet einen Kanal für die Bewegung eines Arretierelements und sorgt für eine zuverlässige Führung des Arretierelements und stellt gleichzeitig eine Abstützfläche bereit.

In Weiterbildung der Erfindung ist der Schieber mittels einer Rückstellfeder in die erste Stellung vorgespannt.

Beim Zurückdrücken der Betätigungsstange bewegt sich der Schieber dadurch selbsttätig in die erste Stellung zurück und ermöglicht es dadurch, dass auch die Arretierelemente wieder zurück in die Umfangsnut oder die Ausnehmung der Betätigungsstange bewegt werden. Durch einfaches Zurückdrücken der Betätigungsstange, sei es von Hand oder mittels eines Aktors, kann die Auslöseeinrichtung dadurch wieder in den betriebsbereiten Zustand versetzt werden.

In Weiterbildung der Erfindung weist der Schieber eine zur Betätigungsstange hin offene Umfangsnut oder Ausnehmung auf, in der das wenigstens eine Arretierelement in der Freigabestellung wenigstens abschnittsweise aufgenommen ist.

Auch in der Freigabestellung wird das Arretierelement dadurch sicher geführt. Dies erleichtert das Zurückbewegen der Auslöseeinrichtung und insbesondere des Arretierelements in die betriebsbereite Stellung, in der das wenigstens eine Arretierelement wieder wenigstens abschnittsweise in der Umfangsnut oder der Ausnehmung der Betätigungsstange aufgenommen ist.

Gemäß der Erfindung ist das wenigstens eine Arretierelement als Walze oder Kugel ausgebildet.

Walzen oder Kugeln sind kostengünstig in sehr präziser Ausführung mit geringen Toleranzen erhältlich und dabei hoch druckfest. Mittels Walzen oder Kugeln als Arretierelemente lassen sich dadurch sehr hohe Auslösekräfte realisieren. Darüber hinaus ist bei der Ausbildung der Arretierelemente als Walzen oder Kugeln kein Verklemmen der Arretierelemente beim Bewegen von der Arretierstellung in die Freigabestellung zu befürchten.

In Weiterbildung der Erfindung sind wenigstens zwei Arretierelemente vorgesehen, die in Umfangsrichtung gleichmäßig um die Betätigungsstange verteilt sind.

Auf diese Weise lässt sich eine gleichmäßige Belastung sowohl der Betätigungsstange als auch des Schiebers und gegebenenfalls der Arretierelementführung erreichen. Ein Verklemmen durch einseitige Belastung der Betätigungsstange ist dadurch nicht zu befürchten.

Gemäß der Erfindung ist ein erster Aktor zum Bewegen des Schiebers von der ersten Stellung in die zweite Stellung vorgesehen, um die Auslöseeinrichtung auszulösen.

Ein solcher Aktor muss zum Auslösen der Auslöseeinrichtung eine Kraft aufbringen, die lediglich ausreichend groß sein muss, um den Schieber von der ersten Stellung in die zweite Stellung zu bewegen. Diese Kraft zum Bewegen des Schiebers bzw. zum Auslösen der Auslöseeinrichtung ist aber unabhängig von der Auslösekraft der Auslöseeinrichtung, also der Kraft, mit der die Betätigungsstange dann bewegt wird, beispielsweise um ein Ventil einer Brandschutzeinrichtung auszulösen.

Gemäß der Erfindung weist der erste Aktor einen Permanentmagnet und einen Elektromagnet auf.

Auf diese Weise können bewährte Aktoren, beispielsweise sogenannte Haftmagnete, verwendet werden, die in sehr einfacher Weise mittels elektrischer Energie angetrieben werden können.

In Weiterbildung der Erfindung weist der erste Aktor ein Bauelement aus einer Formgedächtnislegierung auf.

Formgedächtnislegierungen sind spezielle Metalle, die in zwei unterschiedlichen Kristallstrukturen existieren können. Sie werden auch als Memory-Metalle bezeichnet. Bauelemente aus Formgedächtnislegierungen können eine erste Form einnehmen und verkürzen sich bei einer Erwärmung bis zu einer zweiten Form. Dies wird als Zwei-Wege-Effekt bezeichnet, wobei der Übergang zwischen den beiden Formen durch Temperaturänderung oder mechanische Spannung erfolgt. Eine Erwärmung eines Bauelements aus einer Formgedächtnislegierung kann beispielsweise durch Ohmsche Wärme erfolgen, also durch Leiten eines Stroms durch das Bauelement. Solche Aktoren mit Bauelementen aus Formgedächtnislegierungen sind äußerst zuverlässig und können vergleichsweise hohe Antriebskräfte aufbringen.

Gemäß der Erfindung weist der erste Aktor ein Ankerbauteil auf, das so angeordnet und ausgebildet ist, dass es ausgehend von einer Startstellung eine Beschleunigungsstrecke bis zum Beaufschlagen des in der ersten Stellung befindlichen Schiebers zurücklegt.

Auf diese Weise kann das Ankerbauteil zunächst beschleunigt werden, so dass es mit einem hohen Impuls den Schieber beaufschlagen kann. Genutzt wird infolgedessen die kinetische Energie eines durch den Aktor angetriebenen Ankerbauteils. Beispielsweise kann das Ankerbauteil eines Elektromagneten beschleunigt werden. Nach einer bestimmten Beschleunigungsstrecke ist der Impuls des Ankerbauteils dann hoch genug, um den Schieber von der ersten Stellung in die zweite Stellung zu bewegen und damit die Auslöseeinrichtung auszulösen.

Gemäß der Erfindung ist die Betätigungsstange entgegen der Auslöserichtung so weit verschiebbar, bis das Ankerbauteil sich in der Startstellung befindet.

Die Betätigungsstange kann beispielsweise einen sogenannten Überhub ausführen. Dies bedeutet, dass die Betätigungsstange das Ankerbauteil so weit zurückdrücken kann, bis es in einer Startstellung angeordnet ist. Die Betätigungsstange selbst wird dann, beispielsweise mittels der Auslösefeder, wieder ein Stück zurückbewegt, bis sie sich in der arretierten Position befindet. Dadurch wird sichergestellt, dass das Ankerbauteil eine gewisse Beschleunigungsstrecke hat, bevor es den Schieber beaufschlagt, um diesen von der ersten Stellung in die zweite Stellung zu bewegen.

In Weiterbildung der Erfindung ist ein zweiter Aktor zum Bewegen der Betätigungsstange in die vorgespannte Position vorgesehen.

Auf diese Weise kann auf das händische Zurückstellen der Auslöseeinrichtung verzichtet werden. Ein zweiter Aktor bewegt die Betätigungsstange zurück, bis sich diese wieder in der arretierten, vorgespannten Stellung befindet. Mittels des zweiten Aktors kann auch der Überhub durchgeführt werden. Die Auslöseeinrichtung kann dadurch sehr schnell mittels des zweiten Aktors wieder in einen betriebsbereiten Zustand gebracht werden.

In Weiterbildung der Erfindung weist der zweite Aktor ein Bauelement aus einer Formgedächtnislegierung auf.

In Weiterbildung der Erfindung ist wenigstens eines der Bauelemente des ersten Aktors und/oder des zweiten Aktors aus einer Formgedächtnislegierung als Draht ausgebildet.

Drähte aus Formgedächtnislegierungen sind sehr gut als Aktoren geeignet, da sie nur wenig Raum benötigen und zuverlässig arbeiten.

In Weiterbildung der Erfindung sind Mittel zum Beaufschlagen des Drahts mit einem elektrischen Strom vorgesehen.

Auf diese Weise kann der Draht bzw. die Drähte in einfacher Weise erwärmt werden.

In Weiterbildung der Erfindung ist ein Sensormodul zum Überwachen der korrekten Montage der Auslöseeinrichtung an einem Gegenstück, insbesondere an einem Ventil, vorgesehen.

Auf diese Weise kann automatisch und auch wiederholt überwacht werden, ob die Auslöseeinrichtung korrekt montiert ist. Beispielsweise nützt eine funktionsfähige Auslöseeinrichtung nichts, wenn diese nicht korrekt montiert ist.

In Weiterbildung der Erfindung weist das Sensormodul einen konzentrisch zur Betätigungsstange angeordneten mechanischen Schalter auf.

Mittels eines konzentrisch zur Betätigungsstange angeordneten mechanischen Schalters lässt sich eine gegenüber konventionellen Auslöseeinrichtungen miniaturisierte Auslöseeinrichtung realisieren.

In Weiterbildung der Erfindung weist das Sensormodul ein Druckstück auf, das zur Anlage an dem Gegenstück vorgesehen ist und das eine Gleitlagerbohrung für die Betätigungsstange aufweist.

Das Druckstück übernimmt damit sowohl eine Detektionsfunktion, indem es an dem Gegenstück, beispielsweise einem Ventil, anliegt und dadurch die korrekte Position der Auslöseeinrichtung detektiert. Mittels des Druckstücks kann dann beispielsweise der mechanische Schalter ausgelöst werden. Darüber hinaus übernimmt das Druckstück die Funktion einer Lagerstelle für die Betätigungsstange. Die Betätigungsstange kann dadurch präzise geführt und leichtgängig gelagert werden.

In Weiterbildung der Erfindung ist das Druckstück zum Öffnen oder Schließen eines elektrischen Kontakts vorgesehen.

In Weiterbildung der Erfindung ist eine für die Anlage an dem Werkstück vorgesehene Stirnseite des Druckstücks mit Aussparungen zum Ableiten von unter Druck stehendem Gas oder unter Druck stehender Flüssigkeit versehen.

Wenn die Auslöseeinrichtung zum Beaufschlagen von Ventilen vorgesehen ist, mit denen unter Überdruck stehendes Gas oder unter Überdruck stehende Flüssigkeit geleitet wird, kann nach dem Schließen des Ventils gegebenenfalls noch ein Überdruck zwischen der Auslöseeinrichtung und dem Ventil bestehen. Ein solcher Überdruck kann dann mittels der Aussparungen, beispielsweise Nuten, zuverlässig abgeleitet werden.

Weitere Merkmale und Vorteile der Erfindung ergeben sich aus den Ansprüchen und der folgenden Beschreibung bevorzugter Ausführungsformen der Erfindung im Zusammenhang mit den Zeichnungen. Einzelmerkmale der unterschiedlichen, dargestellten und beschriebenen Ausführungsformen lassen sich dabei miteinander kombinieren, ohne den Rahmen der Erfindung zu überschreiten.

In den Zeichnungen zeigen:

Fig. 1      eine Schnittansicht des arretierten Zustandes einer Auslöseeinrichtung, gemäß einer ersten Ausführungsform,

Fig. 2      eine Schnittansicht des ausgelösten Zustandes der Auslöseeinrichtung der Fig. 1,

Fig. 3      eine geschnittene Explosionsansicht der Auslöseeinrichtung der Fig. 1,

Fig. 4      eine Schnittdarstellung einer Auslöseeinrichtung gemäß einer zweiten Ausführungsform, arretierter Zustand, mit magnetischem ersten Aktor,

Fig. 5      eine Schnittdarstellung der Auslöseeinrichtung der Fig. 4, ausgelöster Zustand, mit magnetischem ersten Aktor,

Fig. 6      eine Schnittdarstellung der Auslöseeinrichtung der Fig. 4, gespannter Zustand mit Überhub der Betätigungsstange, mit magnetischem ersten Aktor,

Fig. 7      eine Schnittdarstellung einer Auslöseeinrichtung gemäß einer dritten Ausführungsform, arretierter Zustand, mit magnetischem ersten Aktor und Rückstellung über zweiten Aktor mit FGL-Antrieb,

Fig. 8      eine Schnittdarstellung des Auslösemechanismus der Fig. 7, ausgelöster Zustand, mit magnetischem ersten Aktor und Rückstellung über zweiten Aktor mit FGL-Antrieb,

Fig. 9      eine Schnittdarstellung des Auslösemechanismus der Fig. 7, gespannter Zustand mit Überhub der Betätigungsstange, mit magnetischem ersten Aktor und Rückstellung über zweiten Aktor mit FGL-Antrieb,

Fig. 10      eine geschnittene Explosionsansicht eines Sensormoduls (N.C.) gemäß einer zweiten Ausführungsform,

Fig. 11      eine Schnittansicht des Sensormoduls (N.C.) der Fig. 10 inkl. Betätigungsstange im nicht montierten Zustand,

Fig. 12      eine geschnittene Detailansicht des Sensormoduls (N.C.) der Fig. 11 im nicht montierten Zustand,

Fig. 13      eine Schnittansicht des Sensormoduls (N.C.) der Fig. 10 inkl. Betätigungsstange im montierten Zustand,

Fig. 14      eine geschnittene Detailansicht des Sensormoduls (N.C.) der Fig. 13 im montierten Zustand,

Fig. 15      eine Schnittansicht der Auslöseeinrichtung gemäß Fig. 1 mit dem Sensormodul (N.C.) aus Fig. 10,

Fig. 16      eine isometrische Ansicht des Sensormoduls aus Fig. 10,

Fig. 17      eine geschnittene Detailansicht eines Sensormoduls (N.O.) gemäß einer weiteren Ausführungsform im nicht montierten Zustand und

Fig. 18      eine geschnittene Detailansicht eines Sensormoduls (N.O.) gemäß einer weiteren Ausführungsform im montierten Zustand.

Bei der erfindungsgemäßen Auslöseeinrichtung ist eine Entkoppelung zwischen einem Antrieb, der auf die Betätigungsstange wirkt und der letztendlich für einen Auslösevorgang, beispielsweise das Auslösen eines Ventils, vorgesehen ist, und einem weiteren Antrieb realisiert, der zum Auslösen der Auslöseeinrichtung benötigt wird. Die zum Auslösen der Auslöseeinrichtung benötigte Kraft kann beispielsweise mittels eines Fallgewichts, eines Hubmagnets, eines Haftmagneten mit Permanentmagnet, einem Motor, einem pneumatischen bzw. hydraulischen Antrieb oder auch über einen Antrieb auf Basis von Formgedächtnislegierungen erbracht werden.

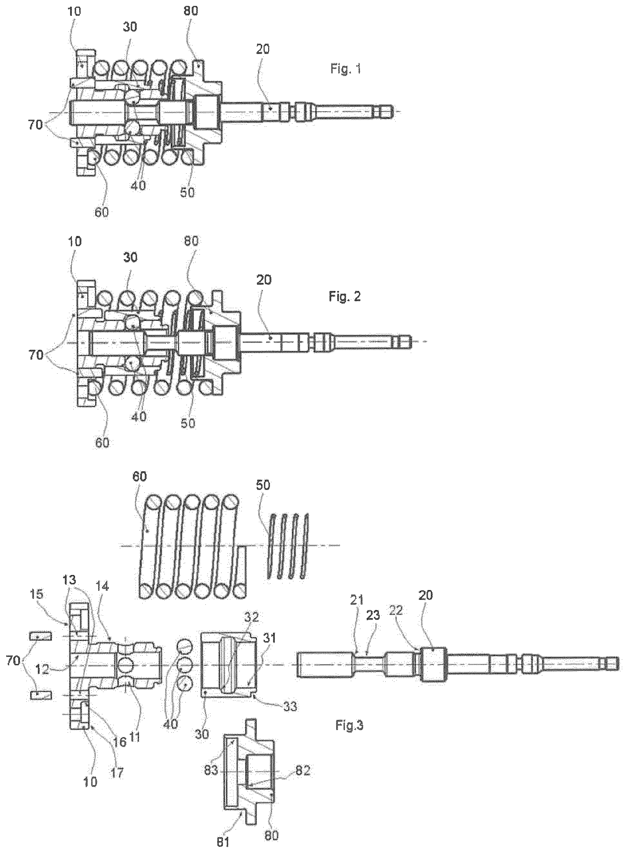

Fig. 1 stellt eine erfindungsgemäße Auslöseeinrichtung dar, wobei der Antrieb zum Auslösen der Auslöseeinrichtung nicht dargestellt ist.

Fig. 1 stellt den arretierten Zustand der Auslöseeinrichtung dar. In diesem Zustand wird die Betätigungsstange (20), die eine umlaufende Nut (23) mit winkligen Stirnseiten (21) aufweist, über mindestens ein Arretierelement (40), wie z.B. einer Kugel, in der Arretierelementführung oder Kugelführung (10) gehalten. Die Arretierelemente (40) werden in den Querbohrungen (11), mindestens eine Querbohrung bzw. entsprechend der Anzahl der Arretierelemente (40), der Kugelführung (10) geführt. Im arretierten Zustand liegt die Betätigungsstange (20) über der Umfangsnut (23) an den Arretierelementen (40) an. Die winklige Stirnseite (21) der Umfangsnut (23) drückt die Arretierelemente (40) in den Querbohrungen (11) der Kugelführung (10) nach außen. Eine Verschiebung der Arretierelemente (40) in Axialrichtung oder radial nach außen findet jedoch nicht statt, da diese über die Führungsfläche (31) des Schiebers (30) in ihrer Bewegung blockiert werden. Die Betätigungsstange (20) ist dadurch gegen eine Bewegung in Auslöserichtung, in Fig. 1 nach rechts, arretiert.

Die Auslösefeder (60) liegt zwischen Federsitz (81) des Federtellers (80) und Federsitz (16) der Kugelführung (10) an. Der Federteller (80) wird über die Federkraft der Auslösefeder (60) und der Rückstellfeder (50), die sich innerhalb der Auslösefeder (60) bewegt, an den Federsitz (22) der Betätigungsstange (20) angedrückt. Infolge der Arretierung der Betätigungsstange (20) und ihrer einseitig blockierten Linearbewegung, sind die Auslösefeder (60) und die Rückstellfeder (50) vorgespannt.

Um die Auslöseeinrichtung auszulösen, muss eine in Fig. 1 nach rechts gerichtete Antriebskraft auf die Auslöseelemente (70) wirken, die in parallel zur Betätigungsstange (20) verlaufenden Bohrungen (13) der Kugelführung (10) axial verschiebbar gelagert sind, so dass diese gegen den Schieber (30) gedrückt werden. Der Schieber (30) ist über die Führungsflächen (31) (14) axial verschiebbar an der Kugelführung gelagert und wird über die Rückstellfeder (50), die am Federsitz (33) des Schiebers (30) geführt ist, gegen die Anlagefläche (17) der Kugelführung (10) gedrückt. Infolge der auf die Auslöseelemente (70) wirkenden Antriebskraft drücken diese auf den Schieber (30) und der Schieber (30) vollzieht eine Linearbewegung in Richtung Federteller (80), in Fig. 1 also nach rechts. Die Arretierelemente (40), die in den Querbohrungen (11) der Kugelführungen (10) geführt sind, sind solange in ihrer Bewegung gesperrt, bis die Umfangsnut (34) des Schiebers (30) mit der Achse der Querbohrungen (11) teilweise oder vollständig fluchtet. Infolge der Federvorspannungen drückt die Betätigungsstange (20) über die winklige Stirnfläche (21) der Umfangsnut (23) die Arretierelemente (40) in die Querbohrungen (11) hinein. Die winklige Stirnfläche der Umfangsnut 21 ist dabei schräg nach außen gerichtet, so dass die an der winkligen Stirnfläche in Fig. 1 anliegenden Arretierelemente 40 bzw. Kugeln also schräg nach außen gedrückt werden. Die Arretierelemente 40 werden in Fig. 1 damit sowohl in axialer Richtung der Betätigungsstange 20, in Fig. 1 also nach rechts, als auch radial nach außen, in Fig. 1 also nach unten bzw. oben, gedrückt. Die Arretierlemente (40) bewegen sich in Richtung der Umfangsnut (34) des Schiebers (30) und drücken den Schieber (30) weiter in Richtung Federteller (80), bis die Arretierelemente (40) am Innendurchmesser der Nut (34) anliegen. In diesem Zustand berühren die Arretierelemente (40) die Stirnfläche (21) der Umfangsnut (23) der Betätigungsstange (20) nicht mehr. Die Betätigungsstange (20) ist entsperrt und vollzieht aufgrund der auf sie wirkenden Federkraft der Auslösefeder (60) eine Linearbewegung in Auslöserichtung, in Fig. 1 nach rechts. Die Betätigungsstange 20 kann dann beispielsweise ein Ventil öffnen.

Fig. 2 stellt den ausgelösten Zustand des Auslösemechanismus dar. Die Arretierelemente 40 liegen nun auf dem Außenumfang der Betätigungsstange außerhalb der Nut 23 an. Die Arretierelemente sind teilweise in der Querbohrung der Arretierelementführung bzw. Kugelführung aufgenommen. Darüber hinaus liegen die Arretierelemente 40 abschnittsweise in der Umfangsnut 32 des Schiebers 31.

Um die Auslöseeinrichtung ausgehend vom Zustand der Fig. 2 wieder in den gespannten Zustand der Fig. 1 zurückzubewegen, muss die Betätigungsstange 20 in Fig. 2 nach links, also entgegen der Auslöserichtung, gedrückt werden, bis die Nut 23 der Betätigungsstange radial innerhalb der Arretierelemente 40 zu liegen kommt. Die Arretierelemente können sich dann wieder in die Umfangsnut 23 der Betätigungsstange 20 hineinbewegen und geben dadurch den Schieber 31 frei. Der Schieber wird dann infolge der Wirkung der Rückstellfeder 50 wieder in die in Fig. 1 dargestellte Stellung zurückgedrückt. Die Umfangsnut 32 des Schiebers 31 liegt dann nicht mehr radial außerhalb der Arretierelemente 40, so dass diese, siehe Fig. 1, gegenüber einer Bewegung nach radial außen gesperrt sind. Darüber hinaus liegen die Arretierelemente 40 in der Querbohrung der Kugelführung oder Arretierelementführung. Die Arretierelemente 40 stützen sich in der in Fig. 1 dargestellten Stellung somit einerseits an der Stirnfläche 21 der Umfangsnut 23 der Betätigungsstange 20 und andererseits an den Seitenflächen der Querbohrungen 11 in der Arretierelementführung oder Kugelführung 10 des Gehäuses ab. Die Betätigungsstange ist dadurch wieder gegenüber einer Bewegung in der Auslöserichtung, in Fig. 1 also nach rechts, gesperrt. Beim Zurückdrücken der Betätigungsstange 20 ausgehend vom Zustand der Fig. 2 in den Zustand der Fig. 1 muss die Kraft der Auslösefeder 60 und der Rückstellfeder 50 überwunden werden.

Fig. 3 zeigt eine Explosionsansicht der Auslöseeinrichtung der Fig. 1 und 2.

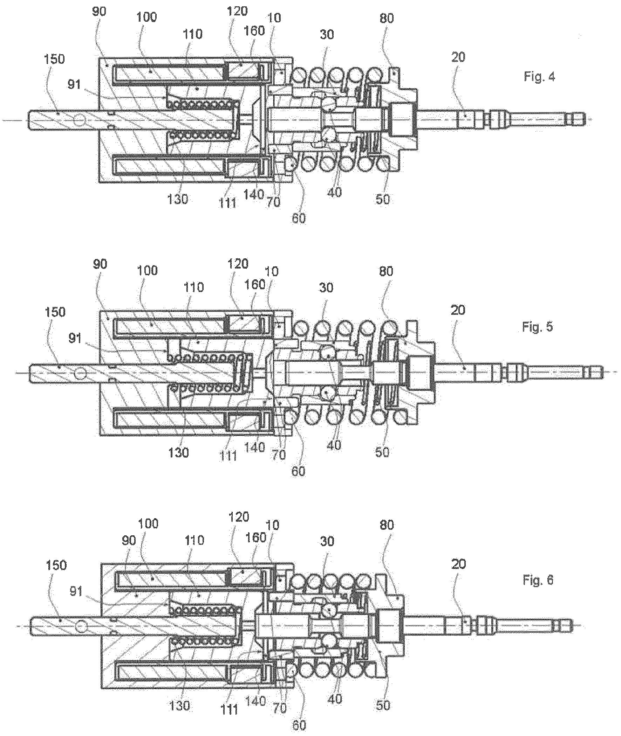

Fig. 4 zeigt eine Schnittansicht einer weiteren Ausführungsform der erfindungsgemäßen Auslöseeinrichtung. Die Auslöseeinrichtung der Fig. 1 ist in Fig. 2 mit einem ersten Aktor in Form eines Haftmagneten kombiniert. Der Haftmagnet stellt einen Antrieb für die Auslöseelemente 70 der Auslöseeinrichtung der Fig. 1 bis 3 dar.

Fig. 4 zeigt den arretierten Zustand der Auslöseeinrichtung, in Verbindung mit einem Haftmagnet als Antrieb.

Dieser Haftmagnet bildet über das Spulengehäuse (90), den Anker (110) und die Ring-Segmente, mindestens zwei, des Permanentmagneten (120) einen magnetischen Kreis. Im arretierten Zustand liegt der Anker (110) an der Anlagefläche (91) des Spulengehäuses (90) an und wird über das gerichtete Permanentmagnetfeld unbestromt an dieser Anlagefläche gehalten. Die Antriebsfeder (130), die zwischen Spulengehäuse (90) und Anker (110) geführt ist, ist in diesem Zustand mit der zum Lösen der Auslöseeinrichtung benötigten Kraft vorgespannt.

Der Nothandbolzen (150), der axial verschiebbar im Spulengehäuse (90) gelagert ist, kann im Notfall eine extern aufgebrachte Kraft, z.B. Muskelkraft, auf den Anker (110) weiterleiten und diesen in Richtung Auslöseelemente (70) verschieben. Werden dabei die Auslöseelemente (70) axial mitverschoben, löst die Auslöseeinrichtung aus.

Es ist in Fig. 4 zu erkennen, dass zwischen der in Fig. 4 rechten Stirnseite des Ankerbauteils 110 und den in Fig. 4 links angeordneten Stirnflächen der Auslöseelemente (70) ein Abstand liegt. Bevor also das Ankerbauteil (110) nach dem Auslösen in seiner Bewegung nach rechts, also in Auslöserichtung, auf die Auslöseelemente (70) trifft, wird es zunächst beschleunigt. Beim Auftreffen auf die Auslöseelemente (70) ist das Ankerbauteil (110) durch die Wirkung der Antriebsfeder (130) somit bereits beschleunigt worden und weist einen Impuls auf, der dann ausreicht, um die Auslöseelemente (70) und damit auch den Schieber (31) schlagartig in der Auslöserichtung, in Fig. 4 also nach rechts, zu drücken.

Fig. 5 stellt den ausgelösten Zustand des Auslösemechanismus, in Verbindung mit einem Haftmagneten als Antrieb, dar. Durch polungsrichtige Bestromung der Spule (100) wird das permanentmagnetische Feld geschwächt bzw. neutralisiert. In diesem bestromten Zustand ist die Federvorspannung der Antriebsfeder (130) größer als die Resthaltekraft des magnetischen Kreises. Der Anker (110) bewegt sich schlagartig in Richtung Arretierelemente (70) und drückt diese mit dem Schieber (30) in Richtung Federteller (80). Der Auslösemechanismus wird aktiviert und die Betätigungsstange (20) wird freigegeben und kann sich, angetrieben durch die Auslösefeder (60) in Auslöserichtung bewegen, in Fig. 4 also nach rechts.

Um den ersten Aktor, der als Haftmagnet ausgeführt ist, und die Auslöserichtung wieder zu spannen, muss der Anker (110) im unbestromten Zustand wieder an die Anlagefläche (91) des Spulengehäuses (90) gedrückt werden. Dieser Vorgang kann nur über einen Überhub der Betätigungsstange (20) entgegen der Auslöserichtung erfolgen.

Fig. 6 stellt diesen Rückstellvorgang dar. Die Betätigungsstange (20) wird über eine externe Kraft, beispielsweise von Hand, in Richtung Anker (110) gedrückt, in Fig. 6. nach links. Ist die winklige Nut-Stirnseite (21) der Betätigungsstange (20) über die Querbohrungen (11) der Kugelführung (10) hinausgefahren, bewegen sich die Arretierelemente (40) radial nach innen in die Nut (21) und geben den Schieber (30) frei. Über die Rückstellfeder (50) wird der Schieber (30) gegen die Auslöseelemente (70) gedrückt. Diese Auslöseelemente (70) werden jedoch in ihrer Linearbewegung vom an der Kugelführung (10) anliegendem Anker (110) blockiert. Aufgrund der federnden Elemente (50) und (60) und der langgezogenen Nut (21) der Betätigungsstange (20), kann diese einen gewissen Überhub vollbringen. Dies ist möglich, da die Umfangsnut in axialer Richtung der Betätigungsstange länger ist als die Arretierelemente (40). Anstelle der Umfangsnut kann auch eine Ausnehmung vorgesehen sein. Über die extern aufgebrachte Kraft kann die Betätigungsstange (20) über ihre reguläre Arretierposition (wie in Fig. 4 dargestellt) hinausbewegt werden. Der Anker (110) wird über die Betätigungsstange (20) an die Anlagefläche (91) des Spulengehäuses (90) gedrückt und in dieser Position mittels des permanentmagnetischen Felds gehalten. In dieser Position wird der Schieber (30) über die Rückstellfeder (50) an die Führungsfläche (14) der Kugelführung (10) gedrückt. Die Arretierelemente (40) liegen nun in der Umfangsnut (23) und an der Führungsfläche (31) des Schiebers an. Der Auslösemechanismus ist arretiert. Entfällt die externe Kraft, bewegt sich ausschließlich die Betätigungsstange (20) wieder in Auslöserichtung, in Fig. 6 nach rechts, bis die Nut-Stirnseite (21) der Betätigungsstange (20) an den Auslöseelementen (40) anliegt. Es liegt der arretierte Zustand, wie in Fig. 4 dargestellt, wieder vor.

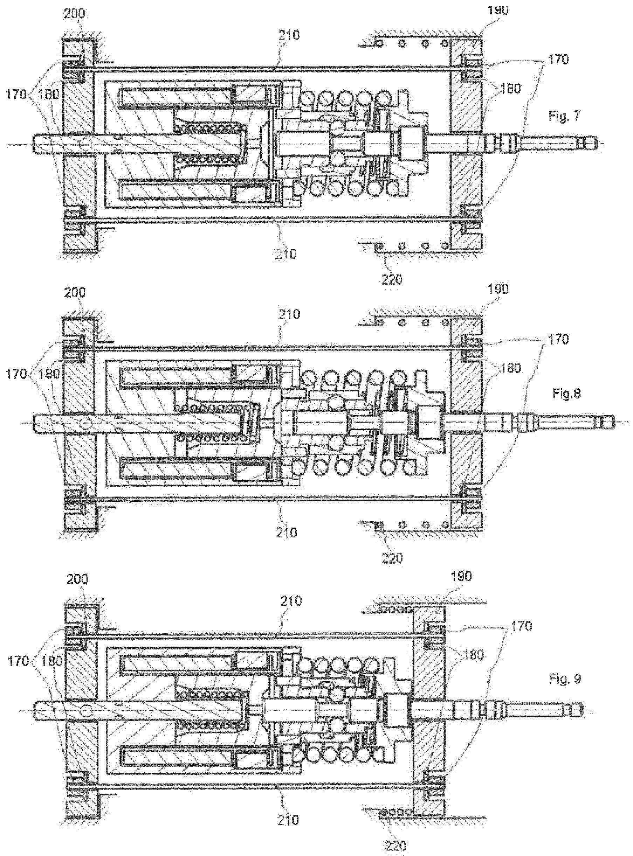

Fig. 7 zeigt eine weitere Ausführungsform einer erfindungsgemäßen Auslöseeinrichtung. In Fig. 7 ist die Auslöseeinrichtung der Fig. 4 mit einem zweiten Aktor kombiniert, der die anhand der Fig. 4 bis 6 beschriebene Rückstellvorrichtung der Betätigungsstange und des ersten Aktors ausführen kann. Die Auslöseeinrichtung der Fig. 7 ist mit einem Haftmagneten kombiniert, der bereits anhand der Fig. 4 bis 6 erläutert wurde und der einen ersten Aktor zum Auslösen der Auslöseeinrichtung darstellt. Ein zweiter Aktor ist mittels mehrerer Drähte 210 aus Formgedächtnislegierung realisiert, die mittels Crimpkontakten 170 an einer Drahtadaptierung 190 bzw. 200 befestigt sind. Die in Fig. 7 links dargestellte Drahtadaptierung 200, oder auch Befestigungseinrichtung, ist relativ zur Umgebung fix montiert. In Fig. 7 ist angedeutet, dass die Drahtadaptierung 200 gegenüber einer Bewegung nach rechts blockiert ist.

Die Drahtadaptierung 190 ist hingegen in axialer Richtung der Betätigungsstange 20 verschiebbar. Die Drahtadaptierung 190 ist mittels einer Feder 220 in Auslöserichtung, in Fig. 7 also nach rechts, vorgespannt. Dadurch werden auch die Drähte 210 in der Auslöserichtung gespannt.

Kontaktbrücken 180 dienen dazu, die Drähte 210 mit einem elektrischen Strom beaufschlagen zu können.

Fig. 7 zeigt die Auslöseeinrichtung im gespannten und arretierten Zustand, wie er in Fig. 4 dargestellt ist.

Ausgehend von dem in Fig. 7 dargestellten Zustand kann, wie anhand der Fig. 4 und 5 erläutert wurde, die Auslöseeinrichtung aktiviert bzw. ausgelöst werden, so dass sich die Betätigungsstange dann in der Auslöserichtung, in Fig. 7 also nach rechts, bewegen kann.

Dieser Zustand der Auslöseeinrichtung, der dem Zustand der Fig. 5 entspricht, ist in Fig. 8 dargestellt. Ausgehend vom Zustand der Fig. 8 muss die Auslöseeinrichtung dann wieder gespannt werden, um in den in Fig. 7 dargestellten Zustand zu gelangen.

Dies erfolgt, wie anhand der Fig. 4 bis 6 erläutert wurde, mittels eines Überhubs der Betätigungsstange 20. Dieser Überhub der Betätigungsstange 20 wird bei der Auslöseeinrichtung der Fig. 7 bis 9 durch den zweiten Aktor mit den Drähten 210 aus Formgedächtnislegierung bewirkt.

Ausgehend vom Zustand der Fig. 8 werden die Drähte 210 mit einem elektrischen Strom beaufschlagt und erwärmen sich dadurch. Die Drähte 210 aus Formgedächtnislegierung verkürzen sich dadurch und bewegen die Drahtadaptierung 190 dadurch ausgehend von der in Fig. 8 dargestellten Stellung entgegen der Auslöserichtung, in Fig. 8 und 9 also nach links. Die Drahtadaptierung 190 spannt dadurch die Auslösefeder 60 der Auslöseeinrichtung. Die Drahtadaptierung 190 bewegt sich so weit entgegen der Auslöseeinrichtung, bis das in Fig. 9 linke Ende der Betätigungsstange 20 das Ankerbauteil 110 in dessen Startstellung zurückgedrückt hat, entsprechend der anhand der Fig. 6 beschriebenen Startstellung.

In der in Fig. 9 dargestellten Stellung wird der Stromfluss durch die Drähte 210 abgeschaltet. Die Drähte 210 dehnen sich infolge der Zugwirkung durch die Feder 220 wieder aus. Die Betätigungsstange 220 kann sich dadurch ebenfalls wieder ein Stück weit in Auslöserichtung bewegen, bis der Zustand der Fig. 7 erreicht ist.

Die Auslöseeinrichtung der Fig. 7 bis 9 kann somit mittels eines elektrischen Signals ausgelöst werden und auch ausgehend vom ausgelösten Zustand der Fig. 8 mittels eines elektrischen Signals bzw. in Verbindung mit einer elektrischen Stromquelle wieder in den gespannten Zustand der Fig. 7 gebracht werden. Ein manuelles Rückstellen durch einen Bediener entfällt dadurch.

Die erfindungsgemäße Auslöseeinrichtung weist unter anderem folgende Vorteile auf:

1) Bei gleicher Größe wie eine bekannte Auslöseeinrichtung ist die Auslösekraft 2-3mal höher. Somit kann ein Ventilstößel eines zu öffnenden Ventils vergrößert werden. Was die Kosten des Ventils senkt sowie dessen Festigkeit erhöht.

2) Der vorliegende Auslösemechanismus ist vom eigentlichen Antrieb, der den Auslösemechanismus aktivieren soll, entkoppelt. Die zum Aktivieren des Auslösemechanismus benötigte Kraft die axial auf die Auslöseelemente (70) wirkt, wird über die abgegebene Kraft des Antriebs, die sog. Antriebskraft, erbracht. Dieser Antrieb kann z.B. ein Fallgewicht, ein Hubmagnet, ein Haftmagnet mit Permanentmagnet, ein Motor, ein pneumatischer bzw. hydraulischer Antrieb sein, oder z.B. ein Antrieb auf Basis von Formgedächtnislegierungen.

3) Gegenüber bekannten Auslöseeinrichtungen kann auf Grund der Entkopplung des Antriebs vom Auslösemechanismus eine Erhöhung der Auslösekraft trotz Miniaturisierung des Systems realisiert werden.

4) Infolge der Entkopplung können nicht magnetische Werkstoffe, wie z.B. Aluminium oder Edelstahl, als Peripherie des Auslösemechanismus verwendet werden, was die Korrosions- und Säurebeständigkeit stark verbessert. Ein Einsatz in der Lebensmittel- oder Chemieindustrie ist dadurch möglich und neue Anwendungen und Märkte können erschlossen werden.

5) Die Auslösekraft ist unabhängig von der Antriebskraft.

6) Insbesondere durch die innenliegende Arretierung mittels des Schiebers (30) und der Rückstellfeder (50), die innerhalb der Auslösefeder (60) angeordnet ist, wird eine Miniaturisierung des Systems erzielt.

7) Durch den Einsatz von magnetischen und unmagnetischen Werkstoffen für die Kugelführung (10) kann die Antriebskraft, die zum Aktivieren des Auslösemechanismus benötigt wird, beeinflusst werden. Eine gezielte Beeinflussung der Weg-Kraft-Kennlinie ist möglich.

8) Mit Hilfe des Winkels an den Stirnflächen der Nut (21) der Betätigungsstange (20), lässt sich die Reibkraft, die durch die Arretierelemente (40) auf den Schieber (30) wirken, beeinflussen. Dadurch kann gezielt die zum Aktivieren des Auslösemechanismus benötigte Kraft eingestellt werden. Das Gleiche gilt für die Winkel an den Stirnflächen der Nut des Schiebers (30).

9) Mit den in Punkt 8) beschriebenen Einstellungen kann ebenfalls die Empfindlichkeit gegen äußere Beschleunigungen bzw. Vibrationen des Systems verbessert werden.

10) Eine Rückstellung des Antriebs erfolgt mit Hilfe des Überhubs der Betätigungsstange (20). Aufgrund der federnden Elemente (50) und (60) und der langgezogenen Nut (21) der Betätigungsstange (20), kann diese einen gewissen Überhub ausführen, das heißt über die ihre Position im gespannten Zustand bewegt werden. Es ist keine Demontage zwischen Auslösemechanismus und Antrieb zum nochmaligen Zurückstellen notwendig. Eine integrierte Bauweise und eine Miniaturisierung des Gesamtsystems ist möglich.

11) Infolge der Miniaturisierung wurde gegenüber bekannten Auslöseeinrichtungen die Masse des Ankers um 2/3 reduziert, was die Empfindlichkeit gegenüber äußeren Beschleunigungen ebenfalls um 2/3 gegenüber herkömmlichen Systemen minimiert.

12) Aufgrund der speziellen Bauweise, ist nur eine Polfläche für den Magnetkreis notwendig.

13) Eine Entriegelung des Auslösemechanismus, also eine Krafteinleitung über Auslöseelemente (70), findet außerhalb des Auslösemechanismus statt. Somit kann die Entkopplung von Antrieb und Auslösemechanismus überhaupt realisiert werden.

14) Um das Risiko gegen ungewolltes Auslösen infolge von äußeren Beschleunigungen bzw. Vibrationen zu reduzieren bzw. zu eliminieren., kann zusätzlich eine Sperrwippe montiert werden, die die Bewegung des Schiebers (30) im Falle äußerer Beschleunigungen sperrt.

15) Eine Automatisierung der Rückstellung über FGL-Antrieb (Antrieb mittels Bauteilen aus Formgedächtnislegierung) (Fig. 7, Fig. 8 und Fig. 9) ist möglich.
Auf Grund der Charakteristik, dass sich Formgedächtnis-Drähte sich bei Erwärmung verkürzen, lässt sich damit ein Linearantrieb verwirklichen, der genutzt werden kann, um die Rückstellung des Auslösemechanismus und des Auslöseantriebes zu automatisieren. Somit wird eine manuelle Rückstellung des Systems über eine Person überflüssig. Eine Erwärmung der Formgedächtnisdrähte kann mittels eines elektrischen Stroms, der durch die Formgedächtnisdrähte fließt, bewirkt werden.

16) Durch die Verwendung eines FGL-Antriebs zur Rückstellung des Systems, lässt sich eine Miniaturisierung des Gesamtsystems realisieren. Andere Antriebe wie z.B. elektromagnetische Antriebe, Motoren, pneumatische oder Hydraulische Antriebe benötigen für den gleichen Arbeitsaufwand, die der FGL-Antrieb in dieser Bauweise für die Rückstellung aufbringt, einen Bauraum der um ein Vielfaches größer ist.

17) Mit der Hybrid-Bauweise, dass der elektromagnetische Antrieb genutzt wird, um den Auslösemechanismus zu aktivieren, und der FGL-Antrieb genutzt wird, um sowohl Auslösemechanismus als auch den elektromagnetischen Antrieb zurückzustellen, werden die Vorteile beider Systeme vereint.

Um eine Auslösung des Systems im Millisekunden Bereich zu gewährleisten, wird für die Aktivierung des Auslösemechanismus der elektromagnetische Antrieb genutzt, da dieser Schaltzeiten im Millisekunden Bereich aufweist.
Für die Rückstellung des Gesamtsystems wird ein großer Hub, sowie sehr hohe Kräfte benötigt, die der Rückstellantrieb über FGL-Drähte aufbringen kann.

18) Um das System noch weiter zu miniaturisieren, besteht die Möglichkeit, sowohl die Auslösung als auch die Rückstellung des Auslösemechanismus über den FGL-Antrieb zu realisieren, ohne einen weiteren Antrieb zu verwenden. Es werden dadurch sowohl die Kosten als auch die Baugröße noch weiter gesenkt.

19) Durch die Abstimmung des Durchmessers der Formgedächtnis-Drähte lässt sich gezielt Schaltzeit, elektr. Energie, Lebensdauer, sowie Kraftbereich des Systems anwendungsgerecht bzw. kundenspezifisch einstellen, ohne die Baugröße zu verändern.

20) Auf Grund der Änderung des elektrischen Widerstandes von FGL-Drähten während des Erwärmungs- bzw. Abkühlvorgangs, lässt sich dieser Effekt zur Positionserkennung bzw. eine Zustandserkennung realisieren. Somit kann detektiert werden, ob der Auslösemechanismus gespannt ist, oder ob er ausgelöst hat. Ebenso kann erkannt werden, ob der Stößel den vollen Hub vollzogen hat.

21) Infolge von Punkt 20 wird nicht notwendigerweise ein zusätzlicher Sensor benötigt. Es können Kosten gespart und das System kann weiter miniaturisiert werden. Im Rahmen der Erfindung kann aber ein Sensormodul zum Erkennen eines korrekten oder nicht korrekten Montagezustands vorgesehen sein.

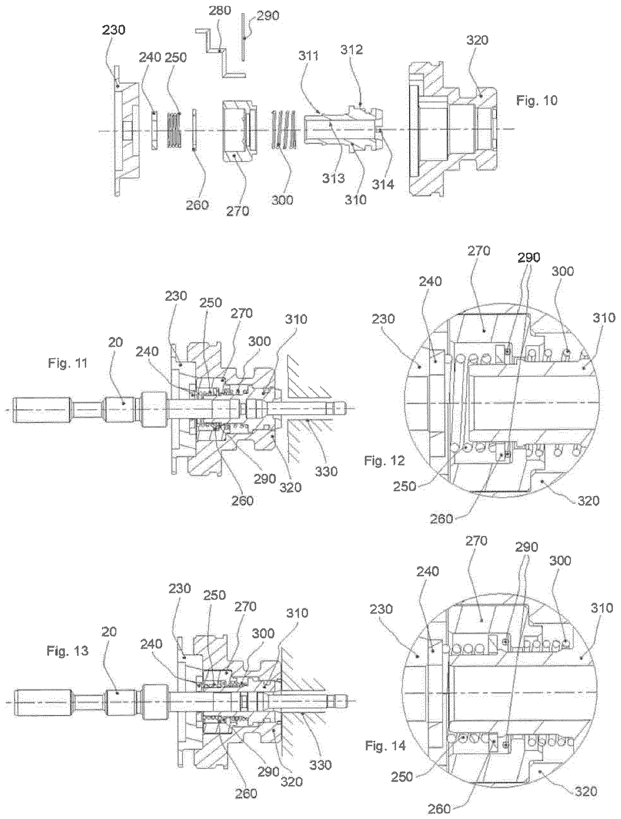

Die Fig. 10 bis 18 zeigen eine Auslöseeinrichtung gemäß einer weiteren Ausführungsform der Erfindung. Gemäß dieser weiteren Ausführungsform ist die Auslöseeinrichtung mit einem Sensormodul versehen, das die korrekte Montage der Auslöseeinrichtung an einem Gegenstand, insbesondere einem Ventil, detektiert.

Fig. 10 zeigt eine Explosionsansicht des Sensormoduls.

Fig. 11 zeigt das Sensormodul mit der Betätigungsstange (20) im nicht montierten Zustand an einem Gegenstand, beispielsweise einem Ventil (330). Fig. 12 zeigt eine Detailansicht aus Fig. 11. Es ist zu erkennen, dass im nicht montierten oder nicht korrekt montierten Zustand der Fig. 11 ein elektrischer Kontakt zwischen Kontaktstiften (290) und einem Kontaktring (260) besteht. Solange dieser elektrische Kontakt besteht, kann ein Strom über die Kontaktstifte 290 und den Kontaktring (260) fließen. Dies kann zum Detektieren eines noch nicht montierten Zustands der Auslöseeinrichtung verwendet werden. Die in den Fig. 10 bis 14 dargestellte Ausführungsform wird als normally closed (N.C.) bezeichnet. Im nicht montierten Zustand ist der mittels des Kontaktrings (260) und der Kontaktstifte (290) gebildete Schalter geschlossen.

Fig. 13 und Fig. 14 zeigen dann den korrekt montierten Zustand der Auslöseeinrichtung. Wie in der Detailansicht der Fig. 14 zu erkennen ist, sind der Kontaktring (260) und die Kontaktstifte (290) in diesem korrekt montierten Zustand voneinander beabstandet. Der korrekt montierte Zustand der Auslöseeinrichtung kann somit über eine Unterbrechung des Stromflusses zwischen dem Kontaktring (260) und den Kontaktstiften (290) detektiert werden. Diese Ausführung wird als "normally closed" (N.C.) bezeichnet.

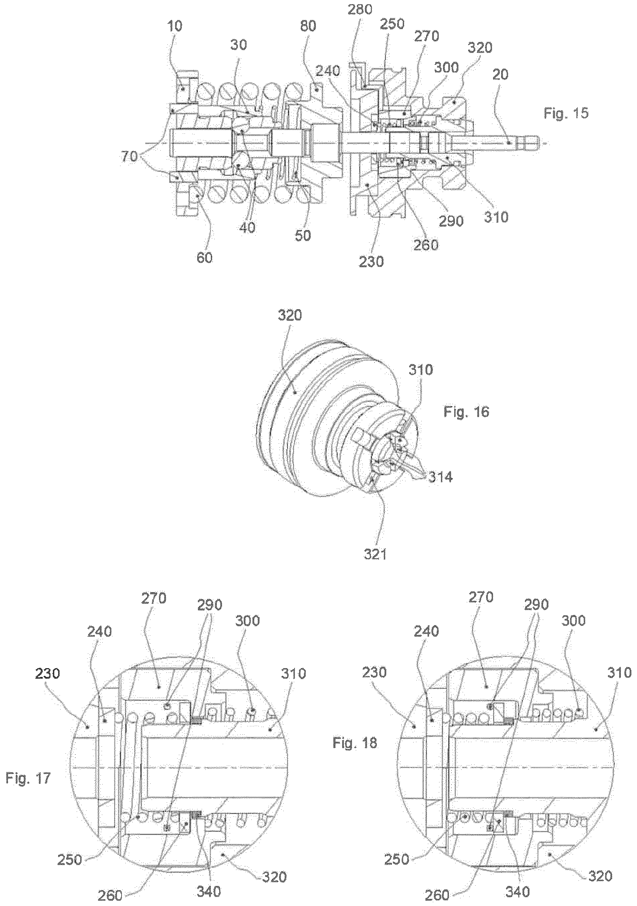

Fig. 15 zeigt die Auslöseeinrichtung der Fig. 1 mit dem Sensormodul der Fig. 10 bis 14.

Fig. 16 zeigt lediglich das Sensormodul der Fig. 10 bis 14 in einer Ansicht von schräg vorne. In Fig. 16 sind in der Stirnfläche des Sensormoduls mehrere Aussparungen (314) zu erkennen. Diese Aussparungen (314) sind als Entgasungsnuten geeignet. Tritt nach dem Öffnen eines Ventils unter Druck stehendes Gas oder unter Druck stehende Flüssigkeit in den Zwischenraum zwischen dem Ventil und dem Sensormodul aus, so können die Aussparungen (314) dafür sorgen, dass das unter Druck stehende Gas oder die unter Druck stehende Flüssigkeit nach außen abgeleitet wird.

Die Fig. 17 und 18 zeigen ein Sensormodul, bei dem im nicht montierten Zustand kein elektrischer Kontakt zwischen dem Kontaktring (260) und den Kontaktstiften (290) besteht. Diese Ausführung wird als "normally open" (N.O.) bezeichnet. Im nicht montierten Zustand der Auslöseeinrichtung kann infolgedessen kein Strom über die Kontaktstifte (290) und den Kontaktring (260) fließen, wodurch der nicht montierte Zustand detektiert werden kann.

Fig. 17 zeigt den nicht oder nicht korrekt montierten Zustand der Auslöseeinrichtung. Zwischen den Kontaktstiften (290) und dem Kontaktring (260) liegt ein Abstand.

Fig. 18 zeigt den korrekt montierten Zustand der Auslöseeinrichtung. Der Kontaktring (260) liegt an den Kontaktstiften (290) an, so dass zwischen dem Kontaktring (260) und den Kontaktstiften (290) ein Strom fließen kann.

Gemäß Fig. 11 ist der Lagerring (230) ist mit der Verschraubung (320) fest verbunden, so dass der Kontaktträger (270) form- und kraftschlüssig auf einer definierten Position gehalten wird. In diesem Kontaktträger (270), bestehend aus einem nicht leitenden Material, sind zwei elektrisch leitende Kontaktstifte (290) eingebracht, an denen jeweils eine Litze (280) angelötet ist. Die beiden Kontaktstifte (270) sind parallel zueinander positioniert und weisen zur Achse der Durchgangsbohrung des Kontaktträgers (270) den gleichen Abstand auf. Über die Kontaktfeder (250), die sich über die Isolierscheibe (240) auf dem Lagerring (230) abstützt, wird der elektrisch leitende Kontaktring (260), die sich links der Kontaktstifte (270) befindet, auf die beiden Kontaktstifte (290) gedrückt.

Dabei werden Kontaktring (260) und Kontaktfeder (250) über das Sensorlager (310), das aus einem nicht elektrisch leitfähigen Material besteht, axial verschiebbar geführt.

Auf Grund des Kontaktes zwischen Kontaktring (260) und den beiden Kontaktstiften (290) entsteht ein geschlossener Stromkreis, der für die Überwachungsfunktion genutzt werden kann. Der dadurch gebildete mechanische Schalter ist im normalen Zustand geschlossen (Fig. 11 und Fig. 12). Ein Diagnosestrom für die Überwachungsfunktion, kann über die extern zugänglichen Litzen (280) geleitet werden.

Über das Schaltlager (310), das sowohl außenliegende Lagerflächen (312), als auch innenliegende Lagerflächen (313) aufweist, kann der geschlossene Stromkreis unterbrochen werden. Das Schaltlager (310) ist axial verschiebbar in der Verschraubung (320) gelagert, und wird über die Schaltfeder (300), die sich am Kontaktträger (270) abstützt, nach rechts gegen die Verschraubung (320) gedrückt. Das Schaltlager (310) steht mit einem definierten Abstand über der Verschraubung (320) vor. Auf Grund der Durchgangsbohrung am Kontaktträger (270) wird eine axiale Bewegung des Schaltlagers (310) vom Kontaktträger (270) nicht behindert.

Wird das Schaltlager (310) über eine extern aufgebrachte Kraft, die z.B. bei der Montage entsteht, nach links gedrückt, nimmt sie bei ihrer linksgerichteten axialen Bewegung über ihre Mitnehmerstufe (311) den Kontaktring (260) nach einem definierten Leerhub mit und hebt diesen von den beiden Kontaktstiften (290) ab. Eine Bewegung des Schaltlagers (310) nach links erfolgt maximal soweit, bis die rechte Stirnfläche des Schaltlagers (310) bündig ist mit der rechten Stirnfläche der Verschraubung (320). Der elektrische Stromkreis ist unterbrochen und der Schalter ist offen. Es kann kein Diagnosestrom fließen (Fig. 13 und Fig. 14).

Wird die Auslöseeinrichtung wieder demontiert, wird das Schaltlager (310) wieder über die Schaltfeder (300) nach rechts gedrückt und somit wird der Kontaktring (260) über die Kontaktfeder (250) an die beiden Kontaktstifte (290) angedrückt. Der Stromkreis ist wieder geschlossen.

Der Schalthub, der benötigt wird, um den Kontaktring (260) abzuheben und den Stromkreis zu unterbrechen, ergibt aus dem Abstand zwischen Kontaktring (260) und der Mitnehmerstufe (311), dem sog. Leerhub, und einem definiertem Überhub. Die Summe von Leerhub und Überhub, dem sog. Schalthub, ergibt den Abstand zwischen Schaltlager (310) und Verschraubung (320) im demontierten Zustand.

Der oben beschriebe Fall stellt die Funktionsweise eines im normalen Zustand geschlossen Schalters dar, der als normally closed (N.C.) bezeichnet wird.

Fig. 17 und 18 zeigen einen Schalter, der in normalem Zustand offen ist (normally open, N.O.).

Um einen im normalen Zustand offenen Schalter zu realisieren, wird der Kontaktring (260) lediglich rechts der beiden Kontaktstifte (290) angeordnet. Wird das Schaltlager (310) über eine extern aufgebrachte Kraft, die z.B. bei der Montage entsteht, nach links gedrückt, nimmt sie bei ihrer linksgerichteten axialen Bewegung, max. bündig bis zur Verschraubung (320), über ihre Mitnehmerstufe (311) den Kontaktring (260) nach einem definierten Leerhub mit und drückt diesen an die beiden Kontaktstifte (290) an. Der elektrische Stromkreis ist geschlossen. Der Schalter ist geschlossen und es kann ein Diagnosestrom fließen (Fig. 17 und Fig. 18). Um den elektrischen Kontakt zwischen Kontaktring (260) und den beiden Kontaktstiften (290) auch bei einer Schiefstellung bzw. einem gewissen Spiel zu gewährleisten, drückt die Mitnehmerstufe (311) über ein federndes Element (z.B. ein Elastomer, eine Feder) (340) auf den Kontaktring (260). Durch dieses federnde Element (340) kann eine gewisse Schiefstellung bzw. ein Spiel überbrückt werden.

Die erfindungsgemäße Auslöseeinrichtung mit Sensormodul weist weitere Vorteile auf:

1) Zentrische und axiale Positionierung des Schalters zur Betätigungsstange (20), ohne Bewegungsfreiheitsgrade der kraftübertragenden Betätigungsstange (20) zu unterbinden bzw. einzuschränken.

2) Auf Grund der Funktions- und Bauweise des Schalters bzw. des Systems, kann der Schalter als Lagerstelle genutzt werden. Dabei dient das Schaltlager (310) als Gleitlager für die Betätigungsstange (20). Über die außenliegenden und innenliegenden Lagerflächen (312) (313) des Schaltlagers (310) werden auftretende Querkräfte von der Betätigungsstange (20) auf die Verschraubung (320) übertragen.

3) Auf Grund der Integralen Bauweise (siehe Punkt 2) kann der gesamte Aktuator weiter miniaturisiert werden. Ebenso entfallen zusätzliche Bauteile (z.B. Gleitlager) was die Kosten senkt.

4) Durch die stirnseitig angebrachten Aussparungen (314) am Schaltlager (310), wir eine Entgasung zwischen Aktor und Gegenstück (z.B. Ventil) nicht unterbrochen bzw. behindert. (Fig. 16)

5) Über das federnde Element (340) kann eine gewisse Schiefstellung und toleranzbedingtes Spiel ausgeglichen werden. Ebenso kann dadurch ein gewisser Ausgleich des Anpressdruckes zwischen Kontaktring (260) und den beiden Kontaktstiften (290) realisiert werden.

6) Über das federnde Element (340) kann ein gewisser Ausgleich des Anpressdruckes des Kontaktringes (260) zu den beiden Kontaktstiften (290) realisiert werden.

7) Schalthübe lassen sich kundenspezifisch anpassen.

8) Verbesserung des Reibkoeffizienten zwischen Betätigungsstange (20) und Schaltlager (310) zur Optimierung der Auslösekräfte des Auslösemechanismus (Fig. 15) durch ausgewählte Materialpaarungen

9) Der Schalter kann sowohl für den Ausgangszustand normally closed (N.C.), als auch für normally open (N.O.) genutzt werden.

Bezugszeichenliste:

(10)  Kugelführung oder Arretierelementführung
(11)  Querbohrung an Kugelführung
(12)  Führungsbohrung an Kugelführung
(13)  parallel zur Führungsbohrung verlaufende Bohrung
(14)  Führungsfläche für Schieber an Kugelführung

(15)     Anlagefläche für Antrieb an Kugelführung
(16)     Führungsfläche für Auslösefeder an Kugelführung
(17)     Anlagefläche für Schieber an Kugelführung
(20)     Betätigungsstange
(21)     Winkel an Nut-Stirnseite der Betätigungsstange
(22)     Anlagefläche für Federsitz an Betätigungsstange
(23)     Nut an Betätigungsstange
(30)     Schieber
(31)     Führungsfläche an Schieber
(32)     Winkel an Schieber
(33)     Federsitz an Schieber
(34)     Nut des Schiebers
(40)     Arretierelement (Kugel)
(50)     Rückstellfeder
(60)     Auslösefeder
(70)     Auslöseelement
(80)     Federteller
(81)     Führungsfläche für Auslösefeder an Federsitz
(82)     Anlagefläche an Federsitz
(83)     Federführung für Rückstellfeder an Federsitz
(90)     Polkern
(91)     Anlagefläche Polkern
(100)    Spule
(110)    Anker
(111)    Anlagefläche Anker
(120)    Permanentmagnet-Segment
(130)    Antriebsfeder
(140)    Führungshülse
(150)    Nothandbolzen
(160)    Spulenkörper
(170)    Crimpkontakt
(180)    Kontaktbrücke
(190)    Drahtadaptierung-los
(200)    Drahtadaptierung-fix
(210)    FGL-Draht
(230)    Lagerring
(240)    Isolierscheibe
(250)    Kontaktfeder
(260)    Kontaktring
(270)    Kontaktträger
(280)    Litze
(290)    Kontaktstift
(300)    Schaltfeder
(310)    Schaltlager
(311)    Mitnehmerstufe
(312)    außenliegende Lagerfläche des Sensorlagers
(313)    innenliegende Lagerfläche des Sensorlagers
(314)    Aussparung für Entgasung
(320)    Verschraubung
(330)    Gegenstück an dem das System bzw. die Verschraubung montiert wird (z.B. Ventil)
(340)    federndes Element (z.B. Elastomer, Druckfeder, Tellerfeder, ...)

**Patentansprüche**

1.  Auslöseeinrichtung, insbesondere für Ventile von Brandschutzeinrichtungen, Wasserstoffanwendungen und dergleichen sowie für mechanische Einrichtungen wie Überrollbügel und Fußgängerschutzeinrichtungen an Kraftfahrzeugen, mit einem Gehäuse, mit einer Betätigungsstange (20), die in und entgegen einer Auslöserichtung axial verschiebbar an oder in dem Gehäuse gelagert ist, mit einer Auslösefeder (60) zum Vorspannen der Betätigungsstange (20) in die Auslöserichtung, mit einer Arretiereinrichtung zum Arretieren der Betätigungsstange (20) in einer vorgespannten Position gegen die Wirkung der Auslösefeder, wobei die Arretiereinrichtung wenigstens ein Arretierelement (40) aufweist, wobei mittels einer Bewegung des Arretierelements (40) die Betätigungsstange (20) freigegeben werden kann, wobei die Betätigungsstange (20) eine Umfangsnut (23) oder eine Ausnehmung aufweist und dass das Arretierelement (40) in radialer Richtung zur Betätigungsstange (20) bewegbar angeordnet ist, wobei das Arretierelement (40) in einer Arretierstellung in die Umfangsnut (23) oder die Ausnehmung der Betätigungsstange (20) eingreift und in einer Freigabestellung außerhalb der Umfangsnut (23) oder der Ausnehmung der Betätigungsstange (20) angeordnet ist, und dass ein Schieber (30) vorgesehen ist, der in axialer Richtung im Gehäuse verschiebbar gelagert ist und der in einer ersten Stellung das wenigstens eine Arretierelement (40) in der Umfangsnut (23) oder in der Ausnehmung der Betätigungsstange (20) blockiert und in einer zweiten Stellung eine Bewegung des Arretierelements (40) aus der Umfangsnut (23) oder aus der Ausnehmung heraus ermöglicht, wobei das wenigstens eine Arretierelement (40) als Walze oder Kugel ausgebildet ist, wobei ein erster Aktor zum Bewegen des Schiebers (30) von der ersten Stellung in die zweite Stellung vorgesehen ist, um die Auslöseeinrichtung auszulösen, **dadurch gekennzeichnet, dass** der erste Aktor einen Permanentmagnet (120) und einen Elektromagnet aufweist und dass der erste Aktor ein Ankerbauteil (110) aufweist, das so angeordnet und ausgebildet ist, dass es ausgehend von einer Startstellung eine Beschleunigungsstrecke bis zum Beaufschlagen des in der ersten Stellung befindlichen Schiebers (30) zurücklegt, wobei insbesondere die Betätigungsstange (20) entgegen der Auslöserichtung so weit verschiebbar ist, bis das Ankerbauteil (110) sich in der Startstellung befindet.

2. Auslöseeinrichtung nach Anspruch 1, **dadurch gekennzeichnet, dass** die Umfangsnut (23) oder die Ausnehmung eine in der Auslöserichtung gesehen hintere Seitenwand aufweist, wobei die hintere Seitenwand sich schräg nach radial außen öffnet, um das Arretierelement (40) in der Arretierstellung sowohl in Auslöserichtung als auch in einer Richtung radial nach außen zu drücken.

3. Auslöseeinrichtung nach Anspruch 1 oder 2, **dadurch gekennzeichnet, dass** der Schieber (30) die Betätigungsstange (20) umgibt und in axialer Richtung der Betätigungsstange (20) verschiebbar gelagert ist.

4. Auslöseeinrichtung nach wenigstens einem der vorstehenden Ansprüche, **dadurch gekennzeichnet, dass** das Gehäuse eine Arretierelementführung aufweist, wobei die Betätigungsstange (20) in oder an der Arretierelementführung axial verschiebbar gelagert ist und der Schieber (30) in oder an der Arretierelementführung axial verschiebbar gelagert ist.

5. Auslöseeinrichtung nach Anspruch 4, **dadurch gekennzeichnet, dass** die Arretierelementführung wenigstens eine Querbohrung aufweist, in der sich das Arretierelement (40) zwischen der Arretierstellung und der Freigabestellung bewegt.

6. Auslöseeinrichtung nach wenigstens einem der vorstehenden Ansprüche, **dadurch gekennzeichnet, dass** der Schieber (30) mittels einer Rückstellfeder (50) in die erste Stellung vorgespannt ist.

7. Auslöseeinrichtung nach wenigstens einem der vorstehenden Ansprüche, **dadurch gekennzeichnet, dass** der Schieber (30) eine zur Betätigungsstange (20) hin offene Umfangsnut (32) oder Ausnehmung aufweist, in der das wenigstens eine Arretierelement (40) in der Freigabestellung wenigstens abschnittsweise aufgenommen ist.

8. Auslöseeinrichtung nach wenigstens einem der vorstehenden Ansprüche, **dadurch gekennzeichnet, dass** wenigstens zwei Arretierelemente (40) vorgesehen sind, die in Umfangsrichtung gleichmäßig um die Betätigungsstange (20) verteilt sind.

9. Auslöseeinrichtung nach wenigstens einem der vorstehenden Ansprüche, **dadurch gekennzeichnet, dass** ein zweiter Aktor zum Bewegen der Betätigungsstange (20) in die vorgespannte Position vorgesehen ist, wobei insbesondere der zweite Aktor ein Bauelement aus einer Formgedächtnislegierung aufweist.

10. Auslöseeinrichtung nach Anspruch 9, **dadurch gekennzeichnet, dass** wenigstens eines der Bauelemente aus einer Formgedächtnislegierung als Draht (210) ausgebildet ist, wobei insbesondere Mittel zum Beaufschlagen des Drahts (210) mit einem elektrischen Strom vorgesehen sind.

11. Auslöseeinrichtung nach wenigstens einem der vorstehenden Ansprüche, **dadurch gekennzeichnet, dass** ein Sensormodul zum Überwachen der korrekten Montage der Auslöseeinrichtung an einem Gegenstück, insbesondere an einem Ventil (330), vorgesehen ist, wobei insbesondere das Sensormodul einen konzentrisch zur Betätigungsstange (20) angeordneten mechanischen Schalter aufweist und/oder das Sensormodul ein Druckstück aufweist, das zur Anlage an dem Gegenstück vorgesehen ist und das eine Gleitlagerbohrung für die Betätigungsstange (20) aufweist, wobei insbesondere das Druckstück zum Öffnen oder Schließen eines elektrischen Kontakts vorgesehen ist.

12. Auslöseeinrichtung nach Anspruch 11, **dadurch gekennzeichnet, dass** eine für die Anlage an dem Werkstück vorgesehene Stirnseite des Druckstücks mit Aussparungen (314) zum Ableiten von unter Druck stehendem Gas oder unter Druck stehender Flüssigkeit versehen ist.

**Claims**

1. Tripping device, in particular for valves of fire protection devices, hydrogen applications and the like, and also for mechanical devices such as roll bars and pedestrian protection devices on motor vehicles, having a housing, having an actuating rod (20) which is mounted on or in the housing axially displaceably in and counter to a tripping direction, having a tripping spring (60) for preloading the actuating rod (20) in the tripping direction, having a locking device for locking the actuating rod (20) in a preloaded position against the action of the tripping spring, wherein the locking device has at least one locking element (40), wherein the actuating rod (20) can be released by means of a movement of the locking element (40), wherein the actuating rod (20) has a circumferential groove (23) or a recess, and wherein the locking element (40) is arranged movably with respect to the actuating rod (20) in the radial direction, wherein the locking element (40) engages into the circumferential groove (23) or the recess in the actuating rod (20) in a locking position and is arranged outside the circumferential groove (23) or the recess in the actuating rod (20) in a release position, and wherein a slide (30) is provided, which is mounted displaceably in the axial direction in the housing and which, in a first position, blocks the at least one locking element (40) in the circumferential groove (23) or in the recess in the actuating rod (20) and, in a second position, allows a movement of the locking element (40) out of the circumferential groove (23) or out of the recess, wherein the at least one locking element (40) is in the form of a roller or ball, wherein a first actuator is provided for moving the slide (30) from the first position to the second position in order to trigger the tripping device, **characterized in that** the first actuator has a permanent magnet (120) and an electromagnet, and **in that** the first actuator has an armature component (110) which is arranged and formed such that, starting from a starting position, it covers an acceleration distance until it meets the slide (30) which is in the first position, wherein in particular the actuating rod (20) can be displaced counter to the tripping direction until the armature component (110) is in the starting position.

2. Tripping device according to Claim 1, **characterized in that** the circumferential groove (23) or the recess has a rear side wall as seen in the tripping direction, wherein the rear side wall opens obliquely radially outwards in order to push the locking element (40) both in the tripping direction and in a radially outwards direction in the locking position.

3. Tripping device according to Claim 1 or 2, **characterized in that** the slide (30) surrounds the actuating rod (20) and is mounted displaceably in the axial direction of the actuating rod (20).

4. Tripping device according to at least one of the preceding claims, **characterized in that** the housing has a locking element guide, wherein the actuating rod (20) is mounted axially displaceably in or on the locking element guide and the slide (30) is mounted axially displaceably in or on the locking element guide.

5. Tripping device according to Claim 4, **characterized in that** the locking element guide has at least one transverse hole, in which the locking element (40) moves between the locking position and the release position.

6. Tripping device according to at least one of the preceding claims, **characterized in that** the slide (30) is preloaded to the first position by means of a return spring (50).

7. Tripping device according to at least one of the preceding claims, **characterized in that** the slide (30) has a circumferential groove (32) or recess which is open in the direction of the actuating rod (20) and in which the at least one locking element (40) is received at least in part in the release position.

8. Tripping device according to at least one of the preceding claims, **characterized in that** at least two locking elements (40) are provided, which are uniformly distributed around the actuating rod (20) in the circumferential direction.

9. Tripping device according to at least one of the preceding claims, **characterized in that** a second actuator is provided for moving the actuating rod (20) to the preloaded position, wherein in particular the second actuator has a component composed of a shape-memory alloy.

10. Tripping device according to Claim 9, **characterized in that** at least one of the components composed of a shape-memory alloy is in the form of a wire (210), wherein in particular means are provided for applying electric current to the wire (210).

11. Tripping device according to at least one of the preceding claims, **characterized in that** a sensor module is provided for monitoring the correct mounting of the tripping device on a mating piece, in particular on a valve (330), wherein in particular the sensor module has a mechanical switch arranged concentrically with respect to the actuating rod (20) and/or the sensor module has a pressure piece, which is provided for bearing against the mating piece and which has a plain bearing bore for the actuating rod (20), wherein in particular the pressure piece is provided for opening or closing an electrical contact.

12. Tripping device according to Claim 11, **characterized in that** an end side of the pressure piece provided for bearing against the workpiece is provided with cutouts (314) for discharging pressurized gas or pressurized liquid.

**Revendications**

1. Dispositif de déclenchement, notamment pour des vannes de dispositifs de protection incendie, d'applications à hydrogène et similaires, ainsi que pour des dispositifs mécaniques tels que des arceaux de sécurité et des dispositifs de protection des piétons sur des véhicules automobiles, comprenant un boîtier, comprenant une tige d'actionnement (20) qui est montée dans le boîtier de manière à pouvoir coulisser axialement dans et à l'opposé d'une direction de déclenchement, comprenant un ressort de déclenchement (60) destiné à précontraindre la tige d'actionnement (20) dans la direction de déclenchement, comprenant un dispositif de blocage destiné à bloquer la tige d'actionnement (20) dans une position précontrainte contre l'action du ressort de déclenchement, le dispositif de blocage comportant au moins un élément de blocage (40), la tige d'actionnement (20) pouvant être libérée au moyen d'un mouvement de l'élément de blocage (40), la tige d'actionnement (20) possédant une rainure périphérique (23) ou un évidement et l'élément de blocage (40) étant disposé de manière mobile dans la direction radiale par rapport à la tige d'actionnement (20), l'élément de blocage (40), dans une position de blocage, s'engageant dans la rainure périphérique (23) ou dans l'évidement de la tige d'actionnement (20) et, dans une position de libération, étant disposé en-dehors de la rainure périphérique (23) ou de l'évidement de la tige d'actionnement (20), et un coulisseau (30) étant prévu, lequel est monté de manière à pouvoir coulisser dans la direction axiale dans le boîtier et qui, dans une première position, bloque l'au moins un élément de blocage (40) dans la rainure périphérique (23) ou dans l'évidement de la tige d'actionnement (20) et, dans une deuxième position, rend possible un mouvement de l'élément de blocage (40) hors de la rainure périphérique (23) ou hors de l'évidement, l'au moins un élément de blocage (40) étant réalisé sous forme d'un rouleau ou d'une bille, un premier actionneur étant prévu pour déplacer le coulisseau (30) de la première position dans la deuxième position afin de déclencher le dispositif de déclenchement, **caractérisé en ce que** le premier actionneur possède un aimant permanent (120) et un électroaimant et **en ce que** le premier actionneur possède un composant formant induit (110), lequel est disposé et configuré de telle sorte qu'il parcourt, à partir d'une position de départ, une course d'accélération jusqu'à ce qu'il vienne en butée contre le coulisseau (30) se trouvant dans la première position, la tige d'actionnement (20) pouvant notamment être coulissée dans le sens opposé à la direction de déclenchement jusqu'à ce que l'élément formant induit (110) se trouve dans la position de départ.

2. Dispositif de déclenchement selon la revendication 1, **caractérisé en ce que** la rainure périphérique (23) ou l'évidement possède une paroi latérale à l'arrière vue dans le sens du déclenchement, la paroi latérale arrière s'ouvrant obliquement vers l'extérieur dans la direction radiale afin de pousser l'élément de blocage (40) dans la position de blocage aussi bien dans la direction du déclenchement que dans une direction radiale vers l'extérieur.

3. Dispositif de déclenchement selon la revendication 1 ou 2, **caractérisé en ce que** le coulisseau (30) entoure la tige d'actionnement (20) et est monté de manière à pouvoir coulisser dans la direction axiale de la tige d'actionnement (20).

4. Dispositif de déclenchement selon au moins l'une des revendications précédentes, **caractérisé en ce que** le boîtier possède un guide d'élément de blocage, la tige d'actionnement (20) étant montée de manière à pouvoir coulisser axialement dans ou sur le guide d'élément de blocage et le coulisseau (30) étant monté de manière à pouvoir coulisser axialement dans ou sur le guide d'élément de blocage.

**5.** Dispositif de déclenchement selon la revendication 4, **caractérisé en ce que** le guide de l'élément de blocage comporte au moins un alésage transversal dans lequel l'élément de blocage (40) se déplace entre la position de blocage et la position de libération.

**6.** Dispositif de déclenchement selon au moins l'une des revendications précédentes, **caractérisé en ce que** le coulisseau (30) est précontraint dans la première position au moyen d'un ressort de rappel (50).

**7.** Dispositif de déclenchement selon au moins l'une des revendications précédentes, **caractérisé en ce que** le coulisseau (30) possède une rainure périphérique (32) ou un évidement ouvert vers la tige d'actionnement (20), dans lequel l'au moins un élément de blocage (40) est logé au moins par portions dans la position de libération.

**8.** Dispositif de déclenchement selon au moins l'une des revendications précédentes, **caractérisé en ce qu'**au moins deux éléments de blocage (40) sont prévus, qui sont répartis uniformément dans la direction périphérique autour de la tige d'actionnement (20).

**9.** Dispositif de déclenchement selon au moins l'une des revendications précédentes, **caractérisé en ce qu'**un deuxième actionneur est prévu pour déplacer la tige d'actionnement (20) dans la position précontrainte, le deuxième actionneur possédant notamment un élément structural en alliage à mémoire de forme.

**10.** Dispositif de déclenchement selon la revendication 9, **caractérisé en ce qu'**au moins l'un des éléments structuraux en un alliage à mémoire de forme est réalisé sous la forme d'un fil (210), des moyens étant notamment prévus pour appliquer un courant électrique au fil (210).

**11.** Dispositif de déclenchement selon au moins l'une des revendications précédentes, **caractérisé en ce qu'**un module capteur est prévu pour surveiller le montage correct du dispositif de déclenchement sur une pièce homologue, notamment sur une soupape (330), le module capteur possédant notamment un commutateur mécanique disposé de manière concentrique par rapport à la tige d'actionnement (20) et/ou le module capteur possédant une pièce de pression qui est prévue pour venir en appui contre la pièce homologue et qui possède un alésage de palier lisse pour la tige d'actionnement (20), la pièce de pression étant notamment prévue pour ouvrir ou fermer un contact électrique.

**12.** Dispositif de déclenchement selon la revendication 11, **caractérisé en ce qu'**une face frontale de la pièce de pression prévue pour venir en appui contre la pièce ouvrée est pourvue d'évidements (314) destinés à évacuer le gaz ou le liquide sous pression.

Fig. 1

Fig. 2

Fig.3

EP 4 105 529 B1

Fig. 4

Fig. 5

Fig. 6

20

EP 4 105 529 B1

200 210 190 170 180 Fig. 7 210 220

200 210 190 170 180 Fig.8 210 220

200 210 190 170 180 Fig. 9 210 220

21

Fig. 10

Fig. 11

Fig. 12

Fig. 13

Fig. 14

Fig. 15

Fig. 16

Fig. 17

Fig. 18

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20140270928 A1
- US 3563098 A
- EP 1583119 A2
- WO 2018130275 A1
- DE 102017123429 A1
- US 8398051 B2
- DE 10208920 A1
- WO 2021023758 A1
- US 5518430 A
- WO 2017180316 A1